# EUROPÄISCHE PATENTSCHRIFT

(11) **EP 1 374 751 B1**
(45) Veröffentlichungstag und Bekanntmachung des Hinweises auf die Patenterteilung: **30.12.2009**
(21) Anmeldenummer: 03013397.9
(22) Anmeldetag: 18.06.2003
(51) Int. Cl.: A47L 13/58, A47L 13/51, B62B 3/02

(54) **Reinigungswagen**
Cleaning trolley
Chariot de nettoyage

(30) Priorität: 20.06.2002 DE 20209597 U
(43) Veröffentlichungstag der Anmeldung: 02.01.2004
(73) Patentinhaber: VERMOP Salmon GmbH, D-97877 Wertheim (DE)
(72) Erfinder: Salmon, Dirk, 97877 Wertheim (DE)
(74) Vertreter: HOFFMANN EITLE

(56) Entgegenhaltungen:
- WO-A-01/44035
- DE-U1- 8 305 946
- LU-A1- 88 687
- US-A- 5 083 805
- US-A- 5 544 744
- US-A- 5 887 878
- US-A- 5 941 381

## Beschreibung

### TECHNISCHES GEBIET

Die vorliegende Erfindung betrifft einen modularen Reinigungswagen mit einem Fahrgestell, welches mit unterschiedlichen Aufbauten bestückbar ist, insbesondere zum Transport von Reinigungsmittelbehältern, Abfallbehältern, Auswringeinrichtungen, oder dergleichen.

### STAND DER TECHNIK

Reinigungswagen mit einem Fahrgestell, welches mit unterschiedlichen Aufbauten bestückbar ist, sind zum Beispiel aus der EP 0 801 925 B1, der DE 44 07 014 A1, der DE 43 22 626 A1, der DE 83 05 946 U1 oder der LU 88 687 A1 bekannt.

In denjenigen Gebieten der Reinigungstechnik, in denen Reinigungswagen der eingangs beschriebenen Art zur Anwendung kommen, sind innerhalb jeweiliger Einsatzspektren oftmals unterschiedlichste Reinigungsaufgaben zu lösen, die zumeist unterschiedliche Reinigungseinrichtungen und Reinigungsmittel erfordern. Aus diesem Grund müssen bisher zumeist mehrere unterschiedliche Reinigungswagen mit einer-unterschiedlichen Ausstattung zur Verfügung gestellt und zum Einsatz gebracht werden. Dies erfordert jedoch einen technischen und personellen Mehraufwand und ist deshalb unwirtschaftlich.

### DARSTELLUNG DER ERFINDUNG

Der Erfindung liegt die Aufgabe beziehungsweise das technische Problem zugrunde, einen neuartigen Reinigungswagen zu schaffen, der besonders einfach und effektiv an unterschiedlichste Einsatzspektren und Reinigungssituationen anpassbar ist.

Diese Aufgabe wird durch einen erfindungsgemäßen Reinigungswagen mit den Merkmalen des Anspruchs 1 gelöst.

Aufgrund der besonderen Ausgestaltungsweise des erfindungsgemäßen Reinigungswagens mit seinem speziellen Adapterelement kann in Vertikalrichtung gewissermaßen eine Dreiteilung des erfindungsgemäßen Reinigungswagens in drei Module, d.h. Fahrgestell, Adapterelement und Aufbauten erzielt werden. Je nach Einsatzspektrum bzw. Reinigungssituation können daher unterschiedliche Aufbauten und/oder unterschiedliche Fahrgestelle oder Fahrgestellelemente schnell, einfach und sicher zu einem funktionierenden Reinigungswagen zusammengesetzt/kombiniert bzw. diese Teile gegen andere, für den jeweiligen Anwendungsfall benötige Aufbauten bzw. Fahrgestelle oder Fahrgestellelemente ausgetauscht werden. Es ist daher nicht mehr nötig, für unterschiedliche Anwendungsfälle einen kompletten zusätzlichen Reinigungswagen zu verwenden. Vielmehr kann beispielsweise ein einzelnes Fahrgestell für unterschiedlichste Aufbauten verwendet werden, oder umgekehrt. Der erfindungsgemäße Reinigungswagen ist somit besonders einfach, effektiv und variabel an unterschiedlichste Einsatzspektren und Reinigungssituationen anpassbar. Gegenüber konventionellen vorbekannten Lösungen lässt sich mit dem erfindungsgemäßen Reinigungswagen somit der technische und personelle Mehraufwand erheblich reduzieren, was auch der Wirtschaftlichkeit zuträglich ist. Zusätzlich gestattet die erfindungsgemäße Lösung eine einfache Wartung der einzelnen Reinigungswagenkomponenten.

Auch im Falle von Beschädigungen oder dergleichen lassen sich die betreffenden Reinigungswagenkomponenten leichter austauschen oder ersetzen, ohne dass der gesamte Reinigungswagen ausfällt, was der Betriebssicherheit und Zuverlässigkeit förderlich ist. Jedoch auch im Hinblick auf den Transport und das Lagern des Reinigungswagens bietet die erfindungsgemäße Lösung nicht unerhebliche Vorteile, da der Reinigungswagen über das besondere Adapterelement leicht demontiert und mit einem geringen Raumbedarf transportiert bzw. verstaut und gelagert und anschließend wieder zusammengesetzt werden kann.

Weitere bevorzugte und vorteilhafte Ausgestaltungsmerkmal des erfindungsgemäßen Reinigungswagens sind Gegenstand der Unteransprüche.

Ein bevorzugtes Ausführungsbeispiel der Erfindung mit zusätzlichen Ausgestaltungsdetails und weiteren Vorteilen ist nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische Perspektivansicht eines erfindungsgemäßen Reinigungswagens;
- Fig. 2: eine schematische Explosionsansicht des erfindungsgemäßen Reinigungswagens von Fig. 1;
- Fig. 3: eine vergrößerte perspektivische Detailansicht der Einzelheit X aus Fig. 2;
- Fig. 4: eine schematische Perspektivansicht eines Rahmeneinsatz für einen Aufspannrahmen des erfindungsgemäßen Reinigungswagens; und
- Fig. 5: eine schematische, teilweise geschnittene Seitenansicht eines Details des Rahmeneinsatz von Fig. 4 in einem eingerasteten Zustand eines Klemmbügels des Rahmeneinsatzes.

### DARSTELLUNG EINES BEVORZUGTEN AUSFÜHRUNGSBEISPIELS

In der nachfolgenden Beschreibung und in den Figuren werden zur Vermeidung von Wiederholungen gleiche Bauteile und Komponenten auch mit gleichen Bezugszeichen gekennzeichnet, sofern keine weitere Differenzierung erforderlich ist.

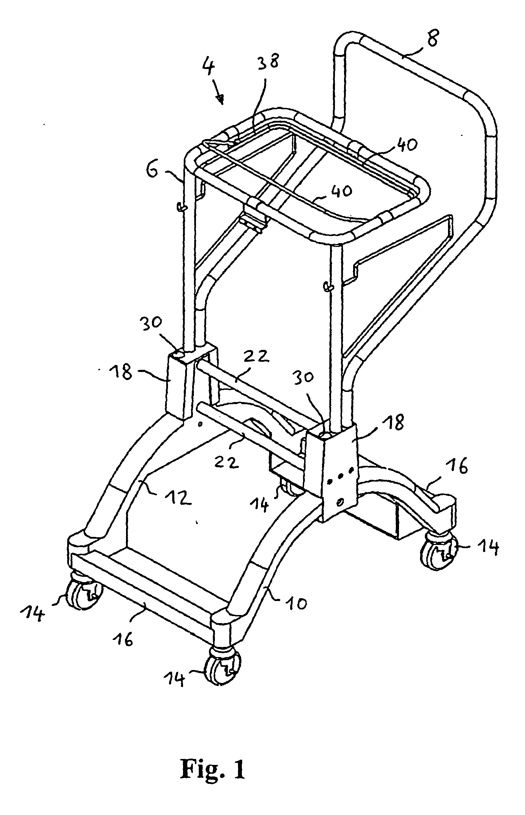

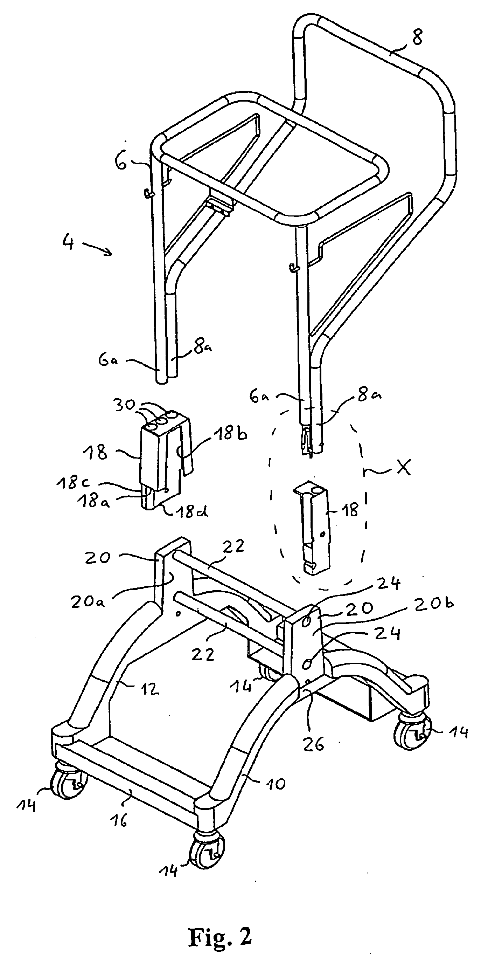

In der Fig. 1 ist eine schematische Perspektivansicht eines erfindungsgemäßen Reinigungswagens und in der Fig. 2 eine schematische Explosionsansicht des erfindungsgemäßen Reinigungswagens von Fig. 1 dargestellt. Wie aus diesen Figuren erkennbar, ist der Reinigungswagen mit einem Fahrgestell 2 und zwei auf dem Fahrgestell 2 angeordneten Aufbauten 6, 8 ausgestattet. Wie in den Fig. 1 und 2 dargestellt, besitzt das Fahrgestell 2 zwei seitlich nebeneinander liegende, bogenförmige Fahrgestellabschnitte 10, 12, an deren Endbereichen jeweils ein Rad 14 angebracht ist.

Im vorliegenden Fall sind diese Fahrgestellabschnitte 10, 12 an ihren Endbereichen jeweils über eine Querverbindung 16 miteinander verbunden. Diese Querverbindung 16 kann sowohl fest bzw. integral als auch lösbar an den bogenförmigen Fahrgestellabschnitten 10, 12 angebracht sein. Zudem kann mindestens eine der Querverbindungen 16 auch Zusatzfunktionen übernehmen und zum Beispiel als Halterung für ein Reinigungsinstrument, einen Behälter oder dergleichen dienen. Der aus den bogenförmigen Fahrgestellabschnitten 10, 12 und deren Querverbindungen 16 gebildete Fahrgestellrahmen kann insgesamt entweder einstückig oder auch mehrteilig ausgestaltet sein.

Wie aus den Fig. 1 und 2 des Weiteren ersichtlich ist, ist zwischen dem Fahrgestell 2 und den Aufbauten 6, 8 mindestens ein lösbares Adapterelement 18 zum lösbaren Anbringen unterschiedlicher Wagenoberteilelemente und/oder zum Ankuppeln unterschiedlicher Fahrgestelle oder Fahrgestellelemente vorgesehen. Im vorliegenden Beispiel besitzt der erfindungsgemäße Reinigungswagen zwei solcher Adapterelemente 18.

Insbesondere aus der Fig. 2 ist gut erkennbar, dass das Fahrgestell 2 an seiner Oberseite und an einem Mittenbereich der bogenförmigen Fahrgestellabschnitte 10, 12 zwei nach oben ragende Aufsteckabschnitte 20 aufweist, auf welche die Adapterelemente 18 jeweils mit einem unteren Adapterelementabschnitt, welcher eine Einstecköffnung 18a mit einem entsprechenden Hohlraum besitzt, aufsteckbar sind und an welchen die Adapterelemente 18 lösbar fixierbar sind.Die Adapterelemente 18 greifen also an einem Mittelbereich des Fahrgestells 2 an.

Durch diese Ausgestaltungsweise ergibt sich in einer vertikalen Richtung gewissermaßen eine Dreiteilung des erfindungsgemäßen Reinigungswagens, d.h. Fahrgestell 2, Adapterelemente 18 und Aufbauten 6, 8.

Die Aufsteckabschnitte 20 besitzen im vorliegenden Ausführungsbeispiel eine im Wesentlichen quaderförmige Grundform. In der Seitenansicht sind die Aufsteckabschnitte 20 hier jedoch trapezförmig ausgestaltet, d.h. sie verjüngen sich geringfügig nach oben. Die Einstecköffnung 18a und der Hohlraum der Adapterelemente 18 sind zu dieser Formgebung korrespondierend ausgestaltet, so dass sich ein gewisser Zentrierungs- und Selbsthalteeffekt der Adapterelemente 18 auf den Aufsteckabschnitte 20 ergibt.

Ferner ist aus den Fig. 1 und 2 ersichtlich, dass die bogenförmigen Fahrgestellabschnitte 10, 12 an einer Seitenfläche 20a der Aufsteckabschnitte 20 über mindestens eine Querstrebe 22 miteinander verbunden sind. Im vorliegenden Fall werden zwei Querstreben 22 verwendet. Zur Anbringung der Querstreben 22 besitzt jeder Aufsteckabschnitt 20 zwei übereinander angeordnete Löcher 24 mit einer horizontalen Achse. Diese Löcher 24 können auch als Durchgangslöcher ausgestaltet sein, wie in Fig. 2 schematisch angedeutet. Die Querstreben 22 sind mit ihren Enden jeweils in diese Löcher 24 eingesteckt und fixiert. Als Querstreben 22 werden beispielsweise Aluminiumrohre mit einem runden Querschnitt verwendet. Andere Querstrebenkonstruktionen, beispielsweise eine einzelne Strebe mit einem rechteckigen oder ovalen Querschnitt oder dergleichen, sowie entsprechende Anbringungsmittel an den Aufsteckabschnitten 20 sind ebenfalls möglich.

Wie deutlich aus der Darstellung des in der Fig. 2 linken Adapterelementes 18 hervorgeht (das rechte Adapterelement 18 ist aufgeschnitten dargestellt; siehe unten), besitzt ein jeweiliges Adapterelement 18 an einer den Querstreben 22 zugewandten Seite eine laterale Aussparung 18b, die in die Einstecköffnung 18a mündet.Auf diese Weise greift das jeweilige Adapterelement 18 in einem auf den Aufsteckabschnitt 20 aufgesteckten Zustand im Bereich der lateralen Aussparung 18b klauenartig über einen jeweiligen Endabschnitt der beiden Querstreben 22.

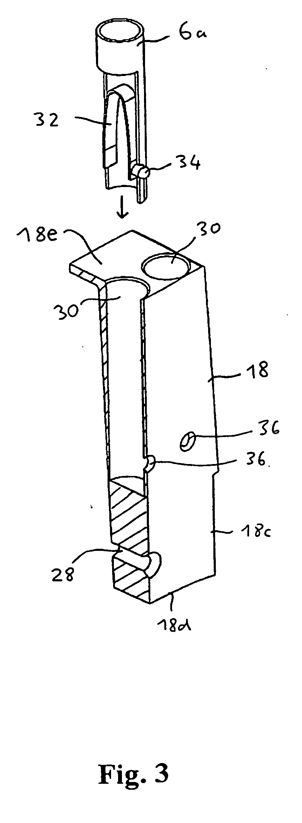

Die der Aussparung 18b abgewandte Seitenfläche 18c des jeweiligen Adapterelementes ist in diesem Beispiel in vertikaler Richtung weiter heruntergezogen und greift mit einem unteren Seitenwandabschnitt 18d in eine Fahrgestellaussparung 26 ein. In dieser tiefergezogenen Seitenfläche 18c bzw. diesem Seitenwandabschnitt 18d ist eine Bohrung 28 (siehe Fig. 3) vorgesehen, über welche das Adapterelement 18 mit Hilfe von geeigneten Befestigungsmitteln (nicht dargestellt) an einer den Querstreben 22 abgewandten Seitenfläche 20b des Aufsteckabschnitts 20 fixierbar ist. Als Befestigungsmittel können beispielsweise Stifte, Schrauben oder dergleichen dienen. Alternativ ist auch eine Rastverbindung oder dergleichen möglich, die auch nicht zwingender Weise an der besagten Seitenfläche 20b des Aufsteckabschnitts 20 angreifen muss.

Fig. 3 zeigt eine vergrößerte perspektivische Detailansicht der Einzelheit X aus Fig. 2. In dieser Zeichnung ist ein Adapterelement 18 in Vertikalrichtung aufgeschnitten dargestellt. Wie in Zusammenschau mit beispielsweise der Fig. 2 deutlich wird, ist das jeweilige Adapterelement 18 an einem oberen Adapterelementabschnitt 18e mit einem Befestigungsabschnitt zum lösbaren Befestigen von wenigstens einem Aufbau 6, 8 ausgestattet. (Grundsätzlich kann der Befestigungsabschnitt natürlich auch an einem oberen seitlichen Bereich des Adapterelementes 18 oder an einer anderen geeigneten Stelle vorgesehen sein.) Im vorliegenden Fall weist der Befestigungsabschnitt drei nebeneinander angeordnete, sich im Wesentlichen vertikal erstreckende Einstecköffnungen 30 zum Einstecken von Aufbauten 6, 8 aufweist.

Die Einstecköffnungen 30 besitzen vorzugsweise einen runden Querschnitt, so dass aus Rohrelementen hergestellte untere Abschnitte 6a, 8a (siehe auch Fig. 2) der Aufbauten 6, 8 besonders einfach an dem jeweiligen Adapterelement 18 montierbar sind. Die Erfindung ist jedoch nicht auf die genannte Anzahl von Einstecköffnungen 30 beschränkt. Je nach Anwendungsfall können auch weniger oder mehr Einstecköffnungen 30 vorgesehen sein. Zudem müssen beim praktischen Einsatz des erfindungsgemäßen Reinigungswagens nicht notwendigerweise alle Einstecköffnungen 30 mit einem Aufbau belegt werden.

Im vorliegenden Ausführungsbeispiel sind durch die jeweils drei Einstecköffnungen 30 drei Aufbauten mit dem betreffenden Adapterelement 18 verbindbar. Als Aufbauten 6, 8 werden für dieses Ausführungsbeispiel ein Schubbügel 8 zum Schieben des Reinigungswagens, ein Aufspannrahmen 6 für einen Abfallsack und eine der Übersichtlichkeit halber nicht gezeigte Halterung für einen Reinigungsmittelbehälter verwendet. Die Aufbauten können ferner mit Aufnahmen für Eimer 7, Stielhalterungen 9, Aufnahmen für Schalen oder ähnlichen ausgeführt sein. Wie in der Fig. 3 schematisch dargestellt ist, wird der jeweilige Aufbau 6, 8 mit einem jeweiligen unteren Rohrende 6a, 8a in eine jeweilige Einstecköffnung 30 eingesteckt und in diesem mittels einer Federraste 32 lösbar gesichert, die mit einem Stift 34 in eine entsprechende Bohrung 36 in dem Adapterelement 18 einrastet.

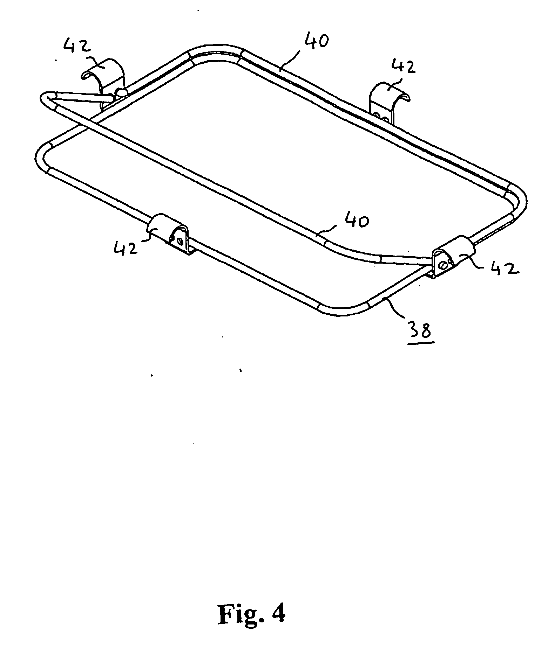

Fig. 4 zeigt eine schematische Perspektivansicht eines Rahmeneinsatzes 38 für den Aufspannrahmen 6, der, wie erwähnt, einen Aufbau 6 des erfindungsgemäßen Reinigungswagens bildet. Der Rahmeneinsatz 38 ist mit zwei schwenkbaren Klemmbügeln 40 versehen. Da die Bau- und Funktionsweise der Klemmbügel 40 gleich ist, wird nachfolgend nur auf einen Klemmbügel 40 Bezug genommen werden. Wie am besten aus der Fig. 1 ersichtlich, ist der Rahmeneinsatz 38 im Betriebszustand des Reinigungswagens innerhalb des Rahmeninnenrandes des Aufspannrahmens 6 angeordnet. Zu diesem Zweck ist der Rahmeneinsatz 38 mit einem Kupplungsmittel 42 zum Anbringen des Rahmeneinsatzes 38 in dem Aufspannrahmen 6 versehen. Das Kupplungsmittel wird im vorliegenden Beispiel durch eine Vielzahl von hakenartigen Aufhängeelementen 42 gebildet, mit denen der Rahmeneinsatzes 38 auf einfache Art und Weise in bzw. an den Aufspannrahmen 6 zu hängen ist (siehe Fig. 1) .

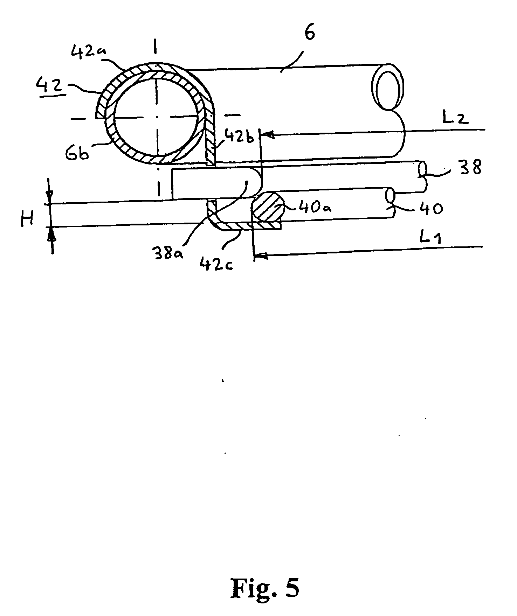

In der Fig. 5 ist in einer schematischen, teilweise geschnittenen Seitenansicht ein Detail des Rahmeneinsatzes 38 von Fig. 4 in einem eingerasteten Zustand des Klemmbügels 40 dargestellt. Wie aus dieser Zeichnung ersichtlich ist, besitzt das gezeigte Aufhängeelement 42 einen sich nach links krümmenden oberen halbkreisförmigen Abschnitt 42a, mit dem der Rahmeneinsatz 38 auf einen Rohrrahmenabschnitt 6b des Aufspannrahmens 6 zu hängen ist, einen vertikalen Schenkel 42b sowie einen nach rechts abgewinkelten unteren horizontalen Abschnitt bzw. Schenkel 42c, der sich von einem dem halbkreisförmigen Abschnitt 42a gegenüberliegenden Schenkelbereich erstreckt. Das Aufhängelement 42 ist derart an dem Rahmeneinsatz 38 fixiert,dass sich an dieser Stelle zwischen der Unterseite des Rahmeneinsatzes 38 und der Oberseite des horizontalen Schenkels 40c ein vertikaler Abstand H oder Zwischenraum ergibt.

Die Größe des Abstands H ist so gewählt, dass dieser geringfügig kleiner als die Dicke bzw. der Durchmesser eines diesem Rahmeneinsatzbereich zugeordneten Klemmbügelabschnitts 40a ist. Ferner ist die Länge L1 des Klemmbügels 40, gemessen von dessen Schwenkpunkt bis zur linken Außenkante des Klemmbügelabschnitts 40a, so festgelegt, dass sie geringfügig größer als eine Länge L2 ist, die von dem Schwenkpunkt des Klemmbügels 40 bis zu der rechten Außenkante des in der Fig. 5 oberhalb dem horizontalen Schenkel 40c befindlichen Rahmeneinsatzabschnitts 38a gemessen ist.

Aufgrund dieser Konstruktionsweise kann der Klemmbügel 40 in einem in den Rahmeneinsatz 38 eingeschwenkten Klemmzustand (so wie in Fig. 5 dargestellt) mit dem Klemmbügelabschnitt 40a lösbar und elastisch (die Elastizität ergibt sich durch die geringfügige Nachgiebigkeit und die Ausgestaltung der zusammenwirkenden Bauteile) zwischen dem Rahmeneinsatzabschnitt 38a und dem horizontalen Schenkel 42c des Aufhängeelementes 42 einrasten. Der horizontale Schenkel 40c bildet hierbei gleichzeitig einen Anschlag für den Klemmbügel 40. Umgekehrt kann der Klemmbügel 40 durch einen leichten Druck nach oben wieder einfach aus seiner Verrastung gelöst werden.

Es ist ersichtlich, dass nicht alle Aufhängeelemente 42 des Rahmeneinsatzes 38 die zuvor beschriebene Ausgestaltungsform besitzen müssen.Mindestens jedoch für ein dem Klemmbügel 40 zugeordnetes Aufhängeelement ist die beschriebene Konstruktionsweise erforderlich, wenn die geschilderte Funktionsweise sichergestellt sein soll.

Die Erfindung ist nicht auf das obige Ausführungsbeispiel, das lediglich der allgemeinen Erläuterung des Kerngedankens der Erfindung dient, beschränkt. Im Rahmen des Schutzumfangs kann der erfindungsgemäße Reinigungswagen auch andere als die oben beispielhaft beschriebene Ausgestaltungsform annehmen. Der Reinigungswagen kann hierbei insbesondere Merkmale aufweisen, die eine Kombination aus den Merkmalen des Hauptanspruch und allen oder nur einigen Einzelmerkmalen der zugehörigen Unteransprüche darstellen. Alternativ zu der oben erläuterten Ausführungsform kann der erfindungsgemäße Reinigungswagen beispielsweise auch so ausgestaltet sein, dass dieser mindestens zwei Adapterelemente aufweist, die über mindestens eine Querstrebe miteinander verbunden sind, wobei das Fahrgestell mindestens zwei seitlich nebeneinander liegende Fahrgestellabschnitte mit jeweils einem Aufsteckabschnitt besitzt, und wobei die mindestens zwei Adapterelemente jeweils auf einen zugehörigen Aufsteckabschnitt aufgesteckt sind, so dass die zwei Fahrgestellabschnitte über die Adapterelemente und deren mindestens eine Querstrebe miteinander verbunden sind. Bei dieser Variante greift die Querstrebe also nicht an den Aufsteckabschnitten des Fahrgestells, sondern lediglich an den Adapterelementen an.Bei Verwendung von mehreren Querstreben ist natürlich auch eine Mischbauweise denkbar, bei der z.B. eine der Strebe an den Adapterelementen angreift und die andere an den Aufsteckabschnitten.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 2: Fahrgestell
- 4: Nutzlast-Wagenoberteil
- 6: Aufbau / Aufspannrahmen
- 6a: Rohrabschnitt
- 6b: Rohrrahmenabschnitt
- 7: Eimeraufnahme
- 8: Aufbau / Schubbügel
- 8a: Rohrabschnitt
- 9: Stielhalterung
- 10: Fahrgestellabschnitt
- 12: Fahrgestellabschnitt
- 14: Räder
- 16: Querverbindungen von 10, 12
- 18: Adapterelemente
- 18a: Einstecköffnung
- 18b: Laterale Aussparung
- 18c: Seitenfläche
- 18d: Unteren Seitenwandabschnitt
- 18e: Oberer Adapterelementabschnitt
- 20: Aufsteckabschnitte
- 20a: Seitenfläche
- 20b: Seitenfläche
- 22: Querstreben
- 24: Löcher
- 26: Fahrgestellaussparung
- 28: Bohrung in 18d
- 30: Einstecköffnung von 18
- 32: Federraste
- 34: Stift von 32
- 36: Bohrung in 18
- 38: Rahmeneinsatz für 6
- 38a: Rahmeneinsatzabschnitt
- 40: Schwenkbarer Klemmbügel
- 40a: Klemmbügelabschnitt
- 42: Kupplungsmittel / hakenartiges Aufhängeelement
- 42a: Halbreisförmiger Abschnitt
- 42b: Vertikaler Schenkel
- 42c: Horizontaler Schenkel

- H: Abstand / Zwischenraum
- L1: Länge
- L2: Länge

## Patentansprüche

1. Modularer Reinigungswagen mit einem Fahrgestell (2, 10, 12), welches mit unterschiedlichen Aufbauten (6, 8) bestückbar ist, wobei an das Fahrgestell (2, 10, 12) mindestens ein Adapterelement (18) lösbar ankuppelbar ist,
**dadurch gekennzeichnet, dass**
das Adapterelement mindestens zwei Einstecköffnungen (30) aufweist, die sich vertikal erstrecken und über die mindestens ein Aufbau (6, 8) lösbar befestigbar ist, so dass sich in Vertikalrichtung eine Dreiteilung in Fahrgestell (2, 10, 12), Adapterelement (18) und Aufbau (6, 8) ergibt.

2. Modularer Reinigungswagen nach Anspruch 1,
**dadurch gekennzeichnet, dass**
mindestens ein Adapterelement (18) in einem Mittelbereich des Fahrgestells (2, 10, 12) ankuppelbar ist.

3. Modularer Reinigungswagen nach einem oder mehreren der vorher genannten Ansprüche,
**dadurch gekennzeichnet, dass**
das Fahrgestell (2, 10, 12) an seiner Oberseite mindestens einen nach oben ragenden Aufsteckabschnitt (20) aufweist, auf den das mindestens eine Adapterelement (18) mit einem unteren Adapterelementabschnitt (18a) aufsteckbar ist und an dem das Adapterelement (18) lösbar ankuppelbar ist.

4. Modularer Reinigungswagen nach Anspruch 3,
**dadurch gekennzeichnet, dass**
dieser mindestens zwei Adapterelemente (18) aufweist, und
das Fahrgestell (2) mindestens zwei seitlich nebeneinander liegende Fahrgestellabschnitte (10, 12) mit jeweils einem Aufsteckabschnitt (20) besitzt.

5. Modularer Reinigungswagen nach Anspruch 4,
**dadurch gekennzeichnet, dass**
die Fahrgestellabschnitte (10, 12) in einem lateralen Bereich der Aufsteckabschnitte (20) über mindestens eine Querstrebe (22) miteinander verbunden sind.

6. Modularer Reinigungswagen nach Anspruch 5,
**dadurch gekennzeichnet, dass**
ein jeweiliges Adapterelement (18) an einer der Querstrebe (22) zugewandten Seite eine laterale Aussparung (18b) besitzt, so dass das Adapterelement (18) in einem auf den Aufsteckabschnitt (20) aufgesteckten Zustand im Bereich der lateralen Aussparung (18b) über einen Endabschnitt der mindestens einen Querstrebe (22) greift.

7. Modularer Reinigungswagen nach Anspruch 3,
**dadurch gekennzeichnet, dass**
dieser mindestens zwei Adapterelemente (18) aufweist, welche miteinander verbunden sind, das Fahrgestell (2) mindestens zwei seitlich nebeneinander liegende Fahrgestellabschnitte (10, 12) mit jeweils einem Aufsteckabschnitt (20) besitzt, und
die mindestens zwei Adapterelemente (18) jeweils auf einen zugehörigen Aufsteckabschnitt (20) aufgesteckt sind, so dass die zwei Fahrgestellabschnitte (10, 12) über die Adapterelemente (18) miteinander verbunden sind.

8. Modularer Reinigungswagen nach einem oder mehreren der Ansprüche 3 bis 7,
**dadurch gekennzeichnet, dass**
das mindestens eine Adapterelement (18) einen Seitenwandabschnitt (18c) besitzt, der über Befestigungsmittel an einer Seitenfläche (20b) des Aufsteckabschnitts (20) fixiert ist.

9. Modularer Reinigungswagen nach einem oder mehreren der vorher genannten Ansprüche,
**dadurch gekennzeichnet, dass**
das Adapterelement (18) drei Einstecköffnungen (30) aufweist, welche nebeneinander angeordnet sind und deren Achsen sich im Wesentlichen vertikal erstrecken.

10. Modularer Reinigungswagen nach einem oder mehreren der vorher genannten Ansprüche,
**dadurch gekennzeichnet, dass**
das Adapterelement (18) im Wesentlichen trapezförmig ausgebildet ist.

11. Modularer Reinigungswagen nach einem oder mehreren der vorher genannten Ansprüche,
**dadurch gekennzeichnet, dass**
die eine Höhe des Adapterelements (18) im Wesentlichen dem dreifachen seiner Breite entspricht.

12. Modularer Reinigungswagen nach einem oder mehreren der vorher genannten Ansprüche,
**dadurch gekennzeichnet, dass**
das mindestens eine Adapterelement (18) einen unteren Adapterelementabschnitt (18d) besitzt, der in eine Fahrgestellaussparung (26) des Fahrgestells (2, 10, 12) eingreift.

13. Modularer Reinigungswagen nach einem oder mehreren der vorher genannten Ansprüche,
**dadurch gekennzeichnet, dass**
der jeweilige Aufbau (6, 8) an einem Ende einen Verriegelungszapfen (34) aufweist, und
das Adapterelement (18) zusätzlich mindestens eine Bohrung (36) im Bereich der jeweiligen Einstecköffnung (30) aufweist, in die der Zapfen im eingeschobenen Zustand einrastbar ist um den Aufbau an dem Fahrgestell (2, 10, 12) lösbar zu befestigen.

14. Modularer Reinigungswagen nach einem oder mehreren der vorher genannten Ansprüche,
**dadurch gekennzeichnet, dass**
dieser als einen Aufbau einen Aufspannrahmen .(6) aufweist, innerhalb dessen Rahmeninnenrand ein Rahmeneinsatz (38) angeordnet ist,
der Rahmeneinsatz (38) mit einem Kupplungsmittel (42) zum Anbringen des Rahmeneinsatzes (38) in dem Aufspannrahmen (6) und mit mindestens einem schwenkbaren Klemmbügel (40) versehen ist, und der Klemmbügel (40) in einem in den Rahmeneinsatz (38) eingeschwenkten Klemmzustand mit mindestens einem Klemmbügelabschnitt (40a) lösbar und elastisch zwischen einem Rahmeneinsatzabschnitt (38a) und einem von einem Abschnitt (42c) des Kupplungsmittels (42) gebildeten Anschlag (42c) einrastet.

## Claims

1. Modular cleaning trolley having a chassis (2, 10, 12) which can be equipped with different superstructures (6, 8), wherein at least one adapter element (18) can be releasably coupled to the chassis (2, 10, 12), **characterised in that** the adapter element has at least two insertion openings (30), which extend vertically, and can be releasably attached via the at least one structure (6, 8) so that a trisection into chassis (2, 10, 12), adapter element (18) and structure (6, 8) is produced in vertical direction.

2. Modular cleaning trolley according to claim 1, **characterised in that** at least one adapter element (18) can be coupled in a central region of the chassis (2, 10, 12).

3. Modular cleaning trolley according to one or more of the previously mentioned claims, **characterised in that** the chassis (2, 10, 12) on its upper side has at least one upwardly projecting mounting section (20), onto which the at least one adapter element (18) with a lower adapter element section (18a) can be mounted and to which the adapter element (18) can be releasably coupled.

4. Modular cleaning trolley according to claim 3, **characterised in that** the latter has at least two adapter elements (18), and the chassis (2) has at least two chassis sections (10, 12) lying laterally next to one another with in each case one mounting section (20).

5. Modular cleaning trolley according to claim 4, **characterised in that** the chassis sections (10, 12) in a lateral region of the mounting sections (20) are connected to one another via at least one transverse bar (22).

6. Modular cleaning trolley according to claim 5, **characterised in that** a particular adapter element (18) on a side facing the transverse bar (22) has a lateral recess (18b) so that the adapter element (18) in a state mounted on the mounting section (20) in the region of the lateral recess (18b) engages over an end section of the at least one transverse bar (22).

7. Modular cleaning trolley according to claim 3, **characterised in that** the latter has at least two adapter elements (18) which are connected to one another, the chassis (2) has at least two chassis sections (10, 12) lying laterally next to one another with in each case one mounting section (20), and the at least two adapter elements (18) are mounted in each case on an associated mounting section (20) so that the two chassis sections (10, 12) are connected to one another via the adapter elements (18).

8. Modular cleaning trolley according to one or more of claims 3 to 7, **characterised in that** the at least one adapter element (18) has a side wall section (18c) which is fixed to one side surface (20b) of the mounting section (20) via attachment means.

9. Modular cleaning trolley according to one or more of the previously mentioned claims, **characterised in that** the adapter element (18) has three insertion openings (30) which are arranged next to one another and the axes of which extend essentially vertically.

10. Modular cleaning trolley according to one or more of the previously mentioned claims, **characterised in that** the adapter element (18) is designed to be essentially trapezoidal.

11. Modular cleaning trolley according to one or more of the previously mentioned claims, **characterised in that** the one height of the adapter element (18) corresponds essentially to three times its width.

12. Modular cleaning trolley according to one or more of the previously mentioned claims, **characterised in that** the at least one adapter element (18) has a lower adapter element section (18d) which engages in a chassis recess (26) of the chassis (2, 10, 12).

13. Modular cleaning trolley according to one or more of the previously mentioned claims, **characterised in that** the particular structure (6, 8) has a locking pin (34) at one end, and the adapter element (18) additionally has at least one bore (36) in the region of the particular insertion opening (30), into which the pin can be locked in the inserted state to attach the structure releasably to the chassis (2, 10, 12).

14. Modular cleaning trolley according to one or more of the previously mentioned claims, **characterised in that** the latter has a clamping frame (6) as a superstructure, within the frame inner edge of which a frame insert (38) is arranged, the frame insert (38) is provided with a coupling means (42) for attaching the frame insert (38) in the clamping frame (6) and with at least one pivotable clamp strap (40), and the clamp strap (40) in a clamping state pivoted into the frame insert (38) engages releasably with at least one clamp strap section (40a) and resiliently between a frame insert section (38a) and a stop (42c) formed by a section (42c) of the coupling means (42).

## Revendications

1. Chariot de nettoyage modulaire, avec un châssis (2, 10, 12) susceptible d'être équipé de différentes superstructures (6, 8), au moins un élément adaptateur (18) étant susceptible d'être accouplé, de manière désolidarisable, au châssis (2, 10, 12),
**caractérisé en ce que**
l'élément adaptateur (18) présente au moins deux ouvertures d'enfichage (30), s'étendant verticalement et par l'intermédiaire desquelles au moins une superstructure (6, 8) est susceptible d'être fixée de manière désolidarisable, de manière à obtenir, en direction verticale, une division en trois en châssis (2, 10, 12), élément adaptateur (18) et superstructure (6, 8).

2. Chariot de nettoyage modulaire selon la revendication 1,
**caractérisé en ce qu'**
au moins un élément adaptateur (18) est susceptible d'être accouplé dans une zone centrale du châssis (2, 10, 12).

3. Chariot de nettoyage modulaire selon l'une ou plusieurs des revendications précédentes,
**caractérisé en ce que**
le châssis (2, 10, 12) présente, sur sa face supérieure, au moins un tronçon d'enfichage (20) faisant saillie vers le haut, sur lequel le au moins un élément adaptateur (18) est susceptible d'être enfiché par un tronçon d'élément adaptateur inférieur (18a) et auquel l'élément adaptateur (18) est susceptible d'être accouplé de manière désolidarisable.

4. Chariot de nettoyage modulaire selon la revendication 3,
**caractérisé en ce que**
celui-ci présente au moins deux éléments adaptateurs (18), et
le châssis (2) comprend au moins deux tronçons de châssis (10, 12) situés latéralement les uns à côté des autres, avec chaque fois un tronçon d'enfichage (20).

5. Chariot de nettoyage modulaire selon la revendication 4,
**caractérisé en ce que**,
dans une zone latérale des tronçons d'enfichage (20), les tronçons de châssis (10, 12) sont reliés ensemble par l'intermédiaire d'au moins une entretoise transversale (22).

6. Chariot de nettoyage modulaire selon la revendication 5,
**caractérisé en ce qu'**
un élément adaptateur (18) respectif comprend, sur un côté tourné vers l'entretoise transversale (22), un évidement latéral (18b), de manière que l'élément adaptateur (18), en un état enfiché sur le tronçon d'enfichage (20), saisisse dans la zone de l'évidement latéral (18b), par l'intermédiaire d'un tronçon d'extrémité de la au moins une entretoise transversale (22).

7. Chariot de nettoyage modulaire selon la revendication 3,
**caractérisé en ce que**
celui-ci présente au moins deux éléments adaptateurs (18), reliés ensemble, le châssis (2) comprend au moins deux tronçons de châssis (10, 12) situées les uns à côté des autres latéralement, avec chaque fois un tronçon d'enfichage (20), et
les au moins deux éléments adaptateurs (18) sont respectivement enfichés sur un tronçon d'enfichage (20) afférent, de manière que les deux tronçons de châssis (10, 12) soient reliés ensemble par l'intermédiaire des éléments adaptateurs (18).

8. Chariot de nettoyage modulaire selon l'une ou plusieurs des revendications 3 à 7,
**caractérisé en ce que**
le au moins un élément adaptateur (18) comprend un tronçon de paroi latérale (18c), fixé à une face latérale (20b) du tronçon d'enfichage (20) par l'intermédiaire de moyens de fixation.

9. Chariot de nettoyage modulaire selon l'une ou plusieurs des revendications précédentes,
**caractérisé en ce que**
l'élément adaptateur (18) présente trois ouvertures d'enfichage (30), disposées les unes à côté des autres et dont les axes s'étendent sensiblement verticalement.

10. Chariot de nettoyage modulaire selon l'une ou plusieurs des revendications précédentes,
**caractérisé en ce que**
l'élément adaptateur (18) est sensiblement de forme trapézoïdale.

11. Chariot de nettoyage modulaire selon l'une ou plusieurs des revendications précédentes,
**caractérisé en ce qu'**
une hauteur de l'élément adaptateur (18) correspond sensiblement au triple de sa largeur.

12. Chariot de nettoyage modulaire selon l'une ou plusieurs des revendications précédentes,
**caractérisé en ce que**
le au moins un élément adaptateur (18) comprend un tronçon d'élément adaptateur inférieur (18d), s'engageant dans un évidement de châssis (26) du châssis (2, 10, 12).

13. Chariot de nettoyage modulaire selon l'une ou plusieurs des revendications précédentes,
**caractérisé en ce que**
la superstructure (6, 8) respective présente, à une extrémité, un tourillon de verrouillage (34) et l'élément adaptateur (18) présente en plus, dans la zone de l'ouverture d'enfichage (30) respective, au moins un perçage (36) dans lequel le tourillon est susceptible d'être encliqueté à l'état inséré, de manière à fixer de manière désolidarisable la superstructure sur le châssis (2, 10, 12).

14. Chariot de nettoyage modulaire selon l'une ou plusieurs des revendications précédentes,
**caractérisé en ce que**
celui-ci présente, en tant que superstructure, un cadre de fixation (6), à l'intérieur du bord intérieur de cadre duquel est disposé un insert de cadre (38), l'insert de cadre (38) est muni d'un moyen de couplage (42), pour le montage de l'insert de cadre (38) dans le cadre de fixation (6), et est muni d'au moins un collier de serrage (40) susceptible de pivoter, et le collier de serrage (40), en un état de serrage pivoté dans l'insert de cadre (38), s'encliquète, de manière désolidarisable et élastique, par au moins un tronçon de collier de serrage (40a), entre un tronçon d'insert de cadre (38a) et une butée (42c), formée par un tronçon (42c) du moyen de couplage (42).
